# EUROPEAN PATENT SPECIFICATION

(11) **EP 0 586 070 B1**
(45) Date of publication and mention of the grant of the patent: **19.06.1996**
(21) Application number: 93305700.2
(22) Date of filing: 20.07.1993
(51) Int. Cl.: C01F 7/06, C01F 7/47

(54) **Method and composition for the alteration of siliceous materials in Bayer process liquors**
Verfahren und Zusammenstellung zur Änderung von silikatischen Materialien in Bayerprozesslaugen
Procédé et composition pour la modification de matières siliceuses dans des liqueurs du procédé Bayer

(30) Priority: 03.08.1992 US 924272
(43) Date of publication of application: 09.03.1994
(73) Proprietor: NALCO CHEMICAL COMPANY, Naperville Illinois 60563-1198 (US)
(72) Inventor: Dimas, Peter A.., Wheaton, Illinois 60187 (US)
(74) Representative: Harrison, David Christopher

(56) References cited:
- WO-A-92/03381
- P.G. COUSINEAU ET AL. 'Light Metals : Proceedings of the 116th TMS Meeting' February 1987 , AIME , WARRENDALE, PA, US
- K.I. THE 'Light Metals : Proceedings of the 121st TMS meeting' March 1992 , TMS MINERALS . METALS . MATERIALS
- CHEMICAL ABSTRACTS, vol. 92, no. 8, 25 February 1980, Columbus, Ohio, US; abstract no. 61106k, page 136 ;
- CHEMICAL ABSTRACTS, vol. 110, no. 18, 1 May 1989, Columbus, Ohio, US; abstract no. 158158g, page 247 ;

## Description

This invention relates to the modification of siliceous materials produced during the Bayer Process.

The Bayer Process is a process for the purification of bauxite, as the first stage in the production of aluminium. Bauxite is digested with a sodium hydroxide solution which dissolves the alumina and precipitates oxides of iron, silicon, titanium, etc. The solution is filtered and the aluminium precipitated as the hydroxide.

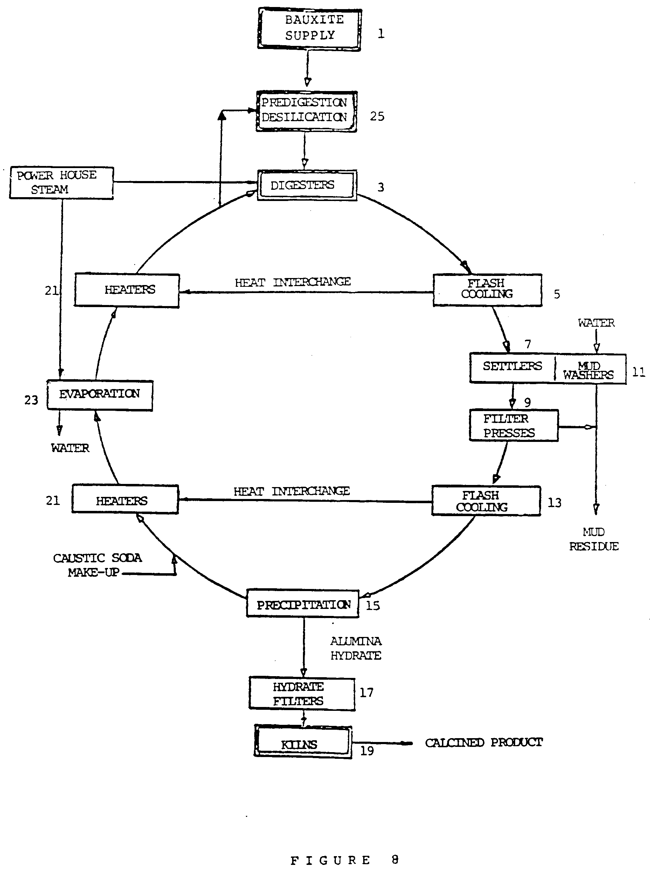

Alumina trihydrate (also known as aluminum hydroxide, alumina, and gibbsite) is produced on an industrial scale in the Bayer process. As shown in Figure 8, a raw ore 1 commonly known as bauxite is contacted with hot caustic soda solution in the digesters 3. This results in the dissolution (digestion) of a considerable portion of the aluminum-bearing minerals, affording a supersaturated solution of sodium aluminate (pregnant liquor) which is flash cooled in flash coolers 5. The cooled pregnant liquor is physically separated from the undigested minerals and other solids in settling tanks 7 and filter presses 9. After the solids are removed from the pregnant liquor, the liquor is again cooled in a flash cooler 13. After the physical separation of undigested mineral residues (red mud) 11, the sodium aluminate solution is precipitated 15 to afford alumina trihydrate, which is recovered by filtration 17 and calcined 19 in a kiln. This precipitation step is promoted by the addition of fine alumina trihydrate seed crystals. The remaining liquor is referred to as depleted or "spent liquor". The depleted or spent liquor is free of suspended solids. After the precipitation step, the spent liquor is then recycled extensively, accumulating a variety of dissolved inorganic-and organic species over time. During the recycle loop of the process, the spent liquor is heated by heaters 21 and concentrated in evaporator 23. The spent liquor is recycled into the digestion tanks.

The bauxite ores used in this process are found in many parts of the world, and the composition of the ore varies from one location to the next. Generally, bauxites are composed of mixtures of inorganic minerals including oxides and hydroxides of the elements aluminum, iron, titanium and silicon, silicates and aluminosilicates (clays), and organic matter.

During the digestion of bauxite ore, the attack of caustic soda on certain silica-bearing components in the ore results in the release of soluble silicate species into the liquor. These soluble silicates then react with alumina and soda to form insoluble sodium aluminosilicates which are also known as desilication products, or DSP.

Silica present in bauxite as clays is particularly susceptible to dissolution by caustic attack. Silica in this form can constitute as much as 5% of the total mass of the bauxite. Silica present as quartz is more resistant to caustic attack and dissolution, and can constitute as much as 10% of the total mass of the bauxite.

The chemical composition of desilication products can vary from one plant to the next owing to differences in plant operating conditions and liquor chemistry. Furthermore, desilication product compositions can vary within a particular plant, depending on the processing temperature and chemical composition at any given point. Nevertheless, many of the desilication products described in the literature conform approximately to the general formula for the sodalite family of minerals:

Na₂O·Al₂O₃·2SiO₂·1/3(Na₂, Ca)(2Cl, SO₄, CO₃, S, 2OH, 2AlO₂, etc.)

Sodalite itself is the chloride mineral, whereas the sulfate and carbonate forms are known as noselite and cancrinite, respectively. Quite often, desilication product samples are found to be physical mixtures of several of these compounds. Deviations from the stoichiometry of the general sodalite formula are commonly observed. For example, deficiencies in the amount of soda compared with that expected for a true sodalite have been attributed to the replacement of sodium by hydrogen from wash water.

Much of the desilication product exits the plant in the red mud, but a significant portion of soluble silica remains in the pregnant liquor. A small but significant amount of this silica appears as a contaminant in the alumina trihydrate. Furthermore, desilication product is deposited as scale on the walls of pipes and vessels in the recycle loop of the plant which includes heaters 21 and evaporators 23. Scaling by DSP is particularly severe on heated equipment surfaces, such as heat exchanger tubes in heaters 21.

The presence of large quantities of soluble siliceous species in spent Bayer liquors and their subsequent transformation into insoluble desilication products is detrimental to the operation of the Bayer process, and therefore, undesirable for several reasons. From the general sodalite formula, it is evident that potentially saleable alumina and costly soda are diverted into desilication products. As the recovery of the alumina and soda is not economically viable, these diversions constitute substantial process losses which are economically significant on an industrial scale. Furthermore, the deposition of desilication products on process equipment surfaces such as on the walls of heat exchanger tubes and pipes reduce their operating efficiencies. For example, the flow of fluids through pipes can be impeded by the accumulation of desilication products as scale on the pipe walls, In heat exchangers, scaling of the tubing walls by desilication products can seriously impede the transfer of heat from the steam side which furnishes heat, to the process liquor which is being heated. The removal of such scales is accomplished by manual and/or chemical means, both of which constitute additional costs to the plant.

The negative impact of desilication products on alumina quality and on Bayer Process efficiency and economics has prompted alumina producers to devise methods for mitigating these detrimental effects.

Much effort has been directed at developing processing methods, which are practiced in conjunction with the digestion of bauxite and which promote the dissolution of the siliceous constituents of bauxite and the subsequent precipitation of desilication products to the greatest extent possible. By depleting the liquor of silica at this stage, the potential for scaling downstream is thereby reduced. For example, the temperature or time of digestion may be increased to promote the desilication reactions. In addition, low-silica bauxites may be subjected to a predigestion desilication step 25 in which the concentrated spent liquor slurry of ground bauxite is held at close to atmospheric boiling temperature for periods of 8 - 24 hours. By this method, fine, high-surface area desilication product seed is formed. When combined with the main digestion slurry, this seed is very effective in promoting the crystallization of desilication product. To raise the concentration of silica above the supersaturation level beyond which desilication products will form, it may also be necessary to add a clay or other siliceous materials in the digestion or predigestion desilication steps. These methods have been summarized in articles such as "Control of Silica in the Bayer Process Used For Alumina Production," S. Ostap, Canadian Metallurgical Quarterly, Vol. 25, No. 2, pp. 101 - 106.

In addition, a wide variety of inorganic salts and compounds, such as oxides, hydroxides, silicates, aluminates, and other forms of calcium, magnesium, and barium have been employed to control desilication of Bayer liquors.

The use of organic treatments to control deposition of desilication products on equipment surfaces is a relatively unexplored area. A hydrophobic organosilicon liquid polymer has been reported to inhibit the formation of scales during heating and evaporation of aluminate liquors (Kazakov, V. G., Potapov; N.G.; Bobrov, A.E., Tsvetn. Met., 1979, (1), 45-48). The same treatment method is reported in Wang, Yajun; Ke, Jiajun, Huagong Yejin, 9(4), 66-72, 1988.

The use of additives to render equipment surfaces resistant to scale adhesion in slurry heat exchangers conveying bauxite ore slurries is mentioned in Liu, Zigao; Huagong Yejin, 11(4), 326-32, 1990.

None of the art with which the applicant is familiar discloses the use of specific classes of polymeric organic nitrogenous compounds to modify the morphology of desilication products and thereby reduce their tendency to adhere to equipment surfaces. Nor is there art that indicates the stabilization of siliceous species in spent Bayer liquor by polymeric quaternary ammonium compounds or polyamine compounds, or any other treatment type.

### Summary of the Invention

One aspect of the present invention provides a method for treating spent Bayer Process liquor containing siliceous components. The method includes the step of adding at least one polyamine or polymeric quaternary ammonium compound to the spent liquor in a concentration of from 50 to 10,000 parts per million of the liquor.

Preferably, the polyamine compound and polymeric quaternary ammonium compound is one polymer selected from the group consisting of the polymeric reaction products of: ethylenedichloride and ammonia, including the associated methyl chloride and dimethyl sulfate quaternary amine salts (QUATS);
epichlorohydrin (EPI) and dimethylamine (DMA), including the associated methyl chloride QUATS or methyl sulfate QUATS; epichlorohydrin, dimethylamine and ethylenediamine, including the associated methyl chloride or methyl sulfate QUATS; epichlorohydrin, dimethylamine and ammonia, including the associated methyl chloride or methyl sulfate QUATS; epichlorohydrin, dimethylamine and hexamethylenediamine, including the associated methyl chloride or methyl sulfate QUATS; triethanolamine (TEA) condensate products, including the associated methyl chloride or methyl sulfate QUATS; the acrylamide copolymer of one or more of the following monomers:
a. Methacrylamidopropyltrimethylammonium chloride (MAPTAC)
b. Dimethylaminoethylmethacrylate methyl sulfate QUAT (DMAEM·MSQ)
c. Dimethylaminoethylmethacrylate methyl chloride QUAT (DMAEM·MCQ)
d. Diallyldimethylammonium chloride (DADMAC)
e. Dimethylaminoethylacrylate methyl chloride quat (DMAEA·MCQ)
f. Dimethylaminoethylacrylate methyl sulfate quat (DMAEA·MSQ);
DADMAC homopolymers (POLYDADMAC) and copolymers; and acrylamide homopolymers (polyacrylamides) and copolymers.

Another aspect of the invention provides a method of reducing the formation of insoluble siliceous deposits upon Bayer Process equipment during a thermal treatment of a spent Bayer Process liquor, the method comprising the step of adding to the spent liquor prior to or during the thermal treatment at least one compound selected from the group consisting of polymeric quaternary ammonium compounds and polyamine compounds in a concentration of from 50 to 10,000 parts per million of the liquor.

### Brief Description of the Drawings

Fig. 1 is electron micrographs of desilication product crystals from precipitation studies conducted without additives and no SiO₂ spike at 5,000 times magnification.

Fig. 2 is electron micrographs of desilication product crystals from precipitation studies conducted with polyDADMAC 100 parts per million at 5,000 times magnification.

Fig. 3 is an electron micrograph of desilication product crystals from precipitation studies conducted with ammonium acrylate-acrylamide copolymer, 100 parts per million at 5,000 times magnification.

Fig. 4 is electron micrographs of desilication product crystals from precipitation studies conducted in the presence of 100% polyacrylamide, Panel A 100 ppm at 2,000 magnification, Panel B 100 ppm at 5,000 magnification.

Fig. 5 is an electron micrograph of desilication product crystals from precipitation studies conducted without additives and with a SiO₂ spike at 5,000 magnification.

Fig. 6 is electron micrographs of desilication product crystals from precipitation studies conducted with a SiO₂ spike and with 100% polyacrylamide, Panel A, 100% polyacrylamide 2,500 ppm at 5,000 magnification; Panel B, 100% polyacrylamide 2,500 ppm at 2,000 times magnification.

Fig. 7 is an electron micrograph of desilication product crystals from precipitation studies conducted with a SiO₂ spike and with EDC-NH₃ condensation polymer, 2,500 ppm at 2,000 times magnification.

Fig. 8 is a schematic representation of a Bayer process.

### Description of the Preferred Embodiments

The present invention provides a method for modifying the composition, the morphology, and the texture of Bayer desilication products. The Bayer desilication products of the invention have a reduced tendency to adhere to process equipment surfaces.

It has been surprisingly discovered that the morphology and texture of the insoluble desilication products formed in the presence of any of the polymeric compounds of the invention are altered from that of the untreated desilication products. These altered desilication products exhibit rounder shapes and smoother surfaces relative to untreated samples. Such modifications of these siliceous particles are expected to confer upon them a reduced tendency to adhere to process equipment surfaces. It is also believed that inorganic scale is affected by the methods of the present invention.

According to the invention, at least one polyamine and/or polymeric quaternary ammonium compound is added to spent Bayer Process liquor to modify the insoluble desilication products as they form. It is believed that, in part, the invention provides its surprising and unexpected results in spent liquor, since spent liquor is free of organic and inorganic solids (red mud) which would interfere with the chemical and physical interaction between the polymeric compounds of the invention and the siliceous materials in the spent liquor.

Polyamine and polymeric quaternary ammonium compounds have been demonstrated to be highly effective in altering the morphology and texture of desilication products produced from spent Bayer liquors. The compounds of the invention are preferably added to the spent liquor as an aqueous solution in an effective dosage, although addition in an organic solvent, such as methanol, or addition as a solid is acceptable. For purposes of the invention, the term "effective dosage" is that dosage of the compound which induces the formation of insoluble desilication products from spent Bayer liquors having modified morphological and/or chemical properties. Preferably, it is added in an effective dosage range of from about 10 to about 10,000 parts per million, and more preferably, in a range of from 100 - 5,000 parts per million. According to one embodiment of the invention, the polyamine or polymeric quaternary ammonium compound is added to the spent Bayer Process liquor prior to or during a thermal treatment of the liquor.

One preferred water-soluble, polymeric quaternary ammonium compound employed in the present process is a polydiallyl dimethyl ammonium chloride (POLYDADMAC) compound constructed from the monomer diallyl dimethyl ammonium chloride (DADMAC). Polymerization of this monomer may be accomplished by standard vinyl polymerization techniques, but is preferably completed by free radical initiation of this vinylic monomer, in the presence or absence of other vinylic monomers such as acrylamide, methylacrylate, and the like. Polymers of this type are described in Butler, U. S. Pat. No. 3,288,770, which is incorporated herein by reference. Polymerization may be accomplished with the DADMAC monomer alone, leading to homopolymers, or with DADMAC and other vinylic monomers, leading to DADMAC containing copolymers.

The preferred POLYDADMACS to be used in this invention are homopolymers of DADMAC which have an Intrinsic Viscosity of at least 0.1 and preferably have an Intrinsic Viscosity ranging between about 0.3 to about 1.0. As stated previously, POLYDADMAC may also refer to other vinylic polymers containing DADMAC monomer, such as copolymers of DADMAC and acrylamide. When copolymers are used, the Intrinsic Viscosities are at least 0.2 and may range as high as 1.5 or above.

The term "Intrinsic Viscosity" as used herein refers to the viscosity-molecular weight relationship as described in detail in chapter IV of "Polymer handbook", Edited by J. Brandrup and E. H. Immergent, Published by Interscience Publishers, New York, 1966.

Copolymers of acrylamide and acrylic acid are also useful in the practice of the present invention. The weight ratio of acrylamide to acrylic acid ranges between about 20:1 to 1:20 and the molecular weight ranges between about 1,000,000 and about 25,000,000 daltons. These copolymers may be added as aqueous solutions. The aqueous solutions being formed by dissolving solid powdered or by dissolving a water-in-oil latex which contains the copolymers and which has previously been described in U. S. Pat. Nos. Re. 28,474 and 28,576, both of which are incorporated herein by reference. Homopolymers of acrylamide (polyacrylamide) are also useful in the practice of the invention. The molecular weight of the polyacrylamide is preferably from 1,000,000 to 25,000,000 daltons.

According to one embodiment of the invention, the polymeric quaternary ammonium compound of the invention is one polymer selected from the group consisting of polymers containing diallyl dimethyl ammonium chloride (DADMAC), methacrylamidopropyl trimethyl ammonium chloride (MAPTAC), dimethyl aminoethyl acrylate and/or its acid salts (DMAEA), dimethylaminoethylmethacrylate (DMAEM), quaternized salts of DMAEA and/or DMAEM, and the like. The invention is not to be limited to the vinyl monomers mentioned above but may include any polymeric quaternary ammonium compound which is synthesized using a vinylic monomer having a substituted nitrogen and which is quaternized with standard quaternizing agents such as dimethyl sulfate, methyl chloride, methyl bromide, and the like.

The polyamine compounds of the invention are preferably chosen from the group consisting of water-soluble or water dispersible condensation polymers which may be formed by condensation polymerization of materials such as epichlorohydrin-dimethylamine, ethylenedichloride-ammonia, ethylene-dichloridemethylamine-ammonia, epichlorohydrin-dimethylamine-ethylene oxidepropylene oxide, aniline-formaldehyde reacted with materials such as epichlorohydrin dimethylamine condensated polymers, or any other condensation polymers which contains epichlorohydrin, dimethylamine, ethylenedichloride, ammonia, methylamine, ethyleneoxide, propyleneoxide, aniline-formaldehyde condensates, or any admixture of the above ingredients, so as to form a condensation polymer which is water-soluble or water-dispersible. The polyamine compounds of the invention preferably have an average molecular weight ranging between about 5,000 to about 250,000 daltons.

More preferably, the polyamine or polymeric quaternary ammonium compound is a hydrophilic alkylene polyamine polyfunctional halohydrin polymer which is the reaction product of an alkylene polyamine with a polyfunctional halohydrin such as dihalohydrin, e.g., alphadichlorohydrin, dibromohydrin, or diiodohydrin, or any of the corresponding monohalohydrins containing a second functional group capable of reacting with an amino nitrogen atom of the alkylene polyamino, such as, for example, epichlorohydrin, epibromohydrin, and the like. The preparation of such materials is discussed in detail in Canadian Patent No. 731,212 which is incorporated by reference.

The relative proportions of the polyamine and polyfunctional halohydrin polymer employed in making the polymers for the purpose of the invention can be varied depending upon the particular types of polyamine and polyfunctional halohydrin and the reaction condition. In general, it is preferable that the molar ratio of the polyfunctional halohydrin to polyamine be in excess of 1:1 and less than 2:1. These polymers may also be quaternized using known methods.

Other polymers which are useful in the practice of the invention include the polymers of the following reactions:
1. Ethylenedichloride and ammonia, including the associated methyl chloride and dimethyl sulfate quaternary amine salts (QUATS);
2. Epichlorohydrin (EPI) and dimethylamine (DMA), including the associated methyl chloride QUATS (MCQ) or methyl sulfate QUATS (MSQ);
3. Epichlorohydrin, dimethylamine and ethylenediamine, these include the associated methyl chloride or methyl sulfate QUATS;
4. Epichlorohydrin, dimethylamine and ammonia, including the associated methyl chloride or methyl sulfate QUATS;
5. Epichlorohydrin, dimethylamine and hexamethylenediamine, including the associated methyl chloride or methyl sulfate QUATS;
6. Triethanolamine (TEA) condensate product, including the associated methyl chloride or methyl sulfate QUATS; and
7. The acrylamide copolymer of one or more of the following monomers:
   a. Methacrylamidopropyltrimethylammonium chloride (MAPTAC)
   b. Dimethylaminoethylmethacrylate methyl sulfate quat (DMAEM·MSQ)
   c. Dimethylarninoethylmethacrylate methyl chloride quat (DMAEM·MCQ)
   d. Diallyldimethylammonium chloride (DADMAC)
   e. Dimethylaminoethylacrylate methyl chloride quat (DMAEA·MCQ)
   f. Dimethylaminoethylacrylate methyl sulfate quat (DMAEA·MSQ)
In the following examples, illustrations are provided for practicing the invention. The following examples are presented to describe preferred embodiments and utilities of the invention and are not meant to limit the invention unless otherwise stated in the claims appended hereto.

### Example 1

A sample of spent Bayer liquor was filtered to remove suspended solids, and then heated to 400°F in a sealed vessel for 30 minutes. After cooling, the contents of the vessel were filtered to separate the crystallized materials from the filtrate.

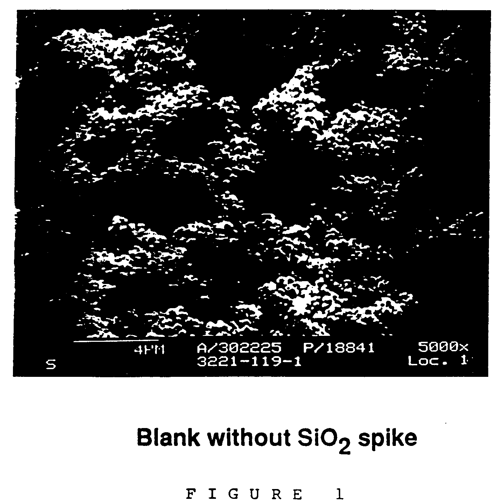

The solids were examined by scanning electron microscopy, which revealed them to be irregular agglomerates of smaller crystals with dimensions of 0.2 to 0.4 microns. A representative micrograph is shown in Figure 1.

### Example 2

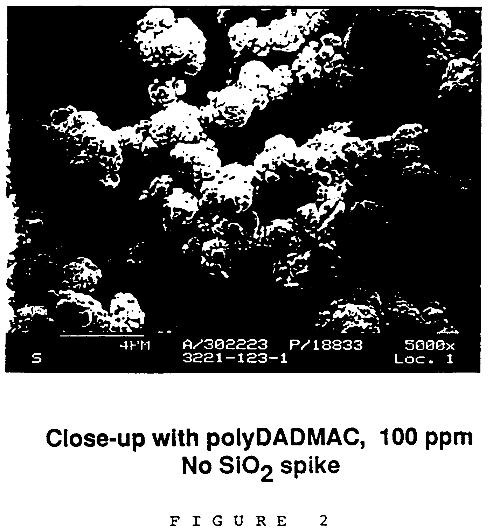

A sample of Bayer liquor was treated with 100 ppm of polyDADMAC, having an Intrinsic Viscosity of about 0.7 and average molecular weight of about 100,000 daltons, obtained from the Nalco Chemical Company. The treated liquor was then heated to 400°F for 30 minutes in a sealed vessel. After cooling, the liquor was filtered to collect the crystallized products. As shown in Figure 2, examination of the solids by SEM reveals them to be clusters of spheroidally shaped agglomerates. Typical dimensions of the spheroids fall in the range of 1 - 4 microns.

### Example 3

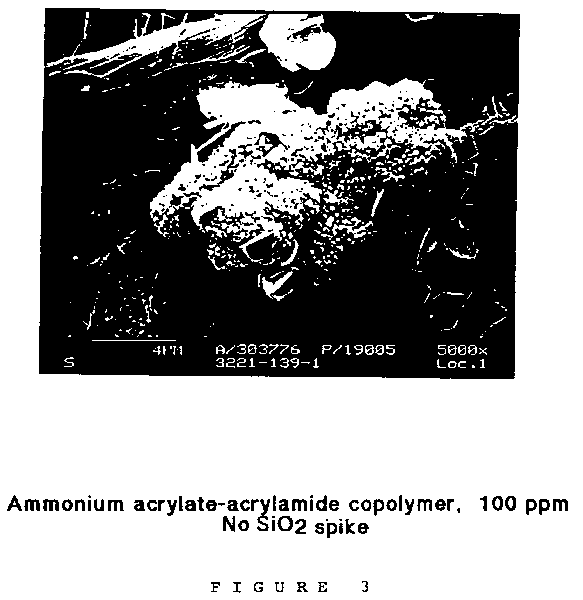

A sample of Bayer liquor was treated with 100 ppm of a copolymer of ammonium acrylate and acrylamide (2:1 monomer ratio and an average molecular weight in excess of 5,000,000 daltons). The liquor was then heated to 400°F for 30 minutes in a sealed vessel. After cooling, the liquor was filtered to collect the crystallized products. As shown in Figure 3, examination of those solids by SEM reveals them to be large agglomerates with dimensions in the range of 5 - 15 microns.

### Example 4

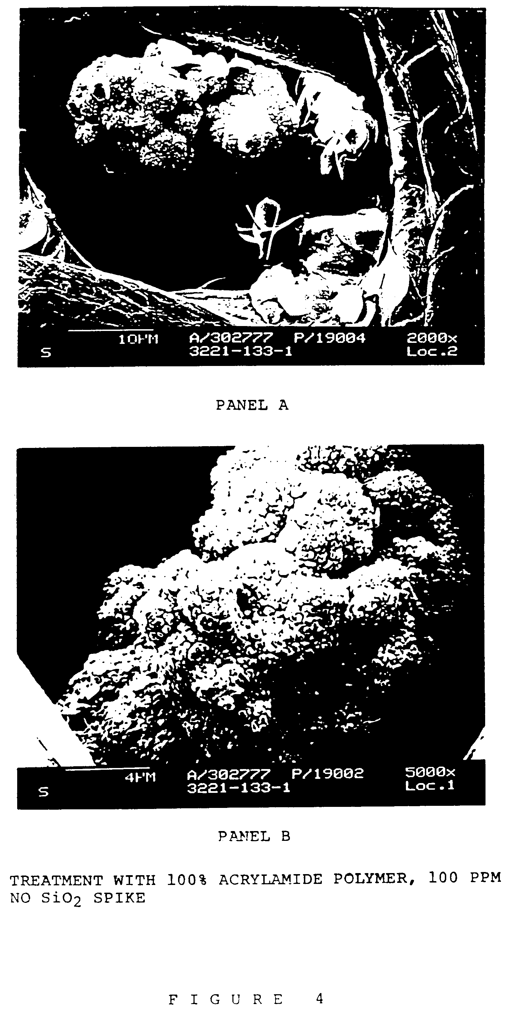

A sample of Bayer liquor was treated with 100 ppm of polyacrylamide, having an average molecular weight of about 8,000,000 daltons, obtained from the Nalco Chemical Company, and then heated to 400°F for 30 minutes in a sealed vessel. After cooling, the liquor was filtered to collect the crystallized products. As shown in figure 4, examination of the solids by SEM reveals them to be large rounded agglomerates with dimensions in the range of 5 - 35 microns. These agglomerates are composed of smaller crystallites, with dimensions of less than 1 micron.

### Example 5

A sample of spent Bayer liquor was treated with sodium silicate to raise the soluble silica content to 3.8 grams of SiO₂ per liter. The treated solution was then heated to 400°F for 30 minutes in sealed vessels. After cooling, the liquors were filtered to collect the crystallized solids.

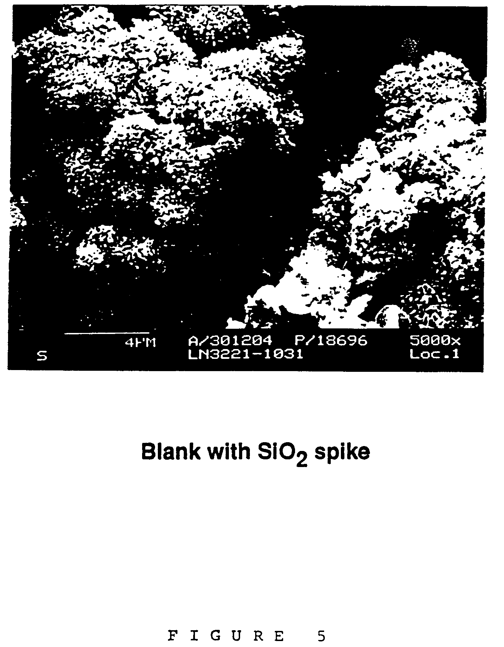

As shown in Figure 5, the solids which are recovered are irregular agglomerates of indefinite size. These agglomerates are composed of smaller particles with typical dimensions well below 1 micron.

### Example 6

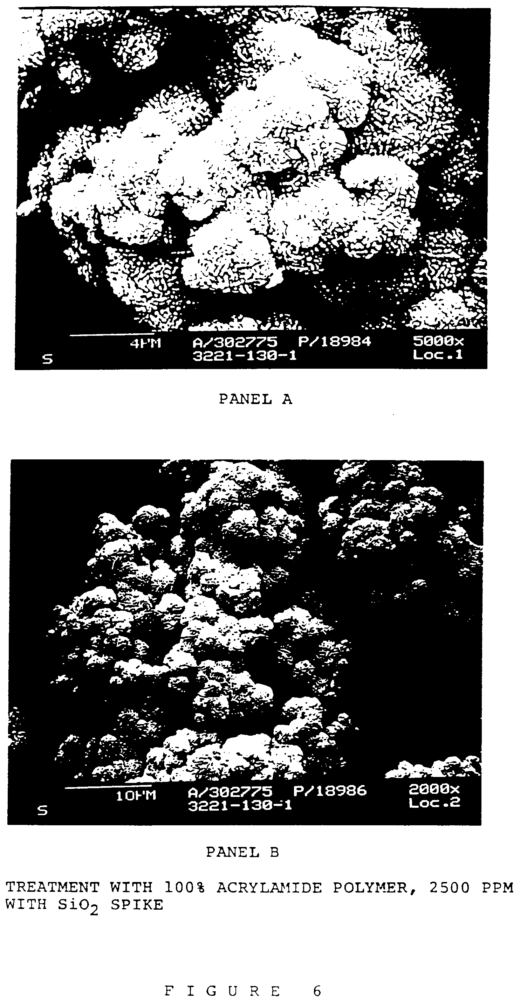

A sample of spent Bayer liquor was treated with sodium silicate to raise the level of soluble silica to 3.8 grams of SiO₂ per liter. The liquor was then treated with 2,500 parts of polyacrylamide per million parts of liquor. The treated solution was then heated to 450°F for 30 minutes in a sealed vessel. The vessel was cooled to ambient temperature, and the contents was filtered to separate the solids from the liquor. As shown in Figure 6, examination of the solids by SEM reveals them to be composed of spheroidal bodies which have fused to form massive agglomerates. The spheroids are typically 1 - 5 microns in diameter, and the resulting agglomerates exhibit dimensions of 10 - 15 microns.

### Example 7

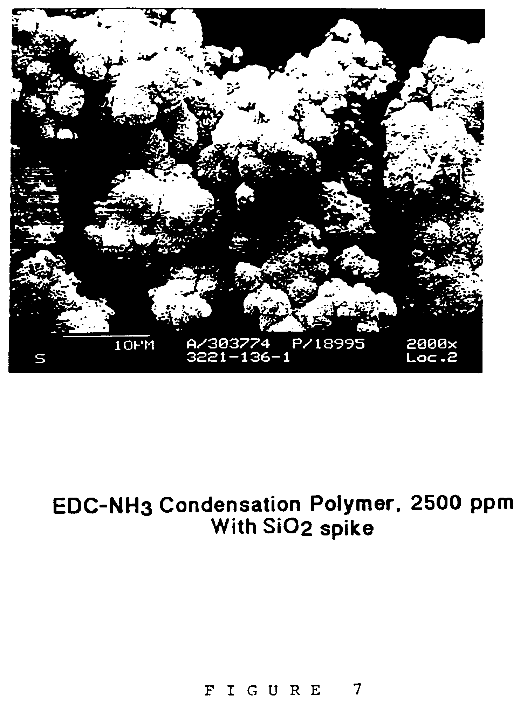

A sample of spent Bayer liquor was treated with sodium silicate to raise the level of soluble silica to 3.8 grams of SiO₂ per liter. The liquor was then cooled to ambient temperature and treated with 2,500 parts of a condensation polymer of ethylene dichloride and ammonia having an average molecular weight of about 30,000 daltons. The treated solution was then heated to 400°F for 30 minutes in a sealed vessel. The vessel was cooled to ambient temperature, and the contents were filtered to separate the solids from the liquor. As shown in Figure 7, examination of the solids by SEM reveals the presence of massive agglomerates composed of spheroidal bodies which are fused together. The spheroidal bodies exhibit diameters of 1 - 5 microns, and the resulting agglomerates exhibit dimensions in excess of 10 microns.

Changes can be made in the composition, operation and arrangement of the method of the present invention described herein without departing from the concept and scope of the invention as defined in the following claims.

## Claims

1. A method for treating spent Bayer Process liquor containing siliceous components, the method including the step of adding at least one polyamine or polymeric quaternary ammonium compound to the spent liquor in a concentration of from 10 to 10,000 parts per million of the liquor.

2. The method of Claim 1 wherein the polyamine and polymeric quaternary ammonium compound is one polymer selected from the group consisting of polyacrylamide, the polymeric reaction products of: ethylenedichloride and ammonia including the associated methyl chloride and dimethyl sulfate quaternary amine salts; epichlorohydrin and dimethylamine including the associated methyl chloride or methyl sulfate quaternary amine salts; epichlorohydrin, dimethylamine and ethylenediamine including the associated methyl chloride or methyl sulfate quaternary amine salts; epichlorohydrin, dimethylamine and ammonia including the associated methyl chloride or methyl sulfate quaternary amine salts; epichlorohydrin, dimethylamine and hexamethylenediamine including the associated methyl chloride or methyl sulfate quaternary amine salts; triethanolamine condensate products including the associated methyl chloride or methyl sulfate quaternary amine salts; the acrylamide copolymer of one of the following monomers: Methacrylamidopropyltrimethylammonium chloride, Dimethylaminoethylmethacrylate methyl sulfate, Dimethylaminoethylmethacrylate methyl chloride, Dimethylaminoethylacrylate methyl chloride, and Dimethylaminoethylacrylate methyl sulfate.

3. The method of Claim 2 wherein the polymer added is from 100 to 5,000 parts per million in the spent liquor.

4. A method of reducing the formation of insoluble siliceous deposits upon Bayer Process equipment during a thermal treatment of spent Bayer Process liquor, the method comprising the step of adding a diallydimethylammonium chloride homopolymer or copolymer to spent Bayer process liquor prior to or during the thermal treatment in a concentration of from 10 to 10,000 parts per million of the liquor.

5. A method of reducing the formation of insoluble siliceous deposits upon Bayer Process equipment during a thermal treatment of spent Bayer Process liquor, the method comprising the step of adding at least one compound selected from the group consisting of polymeric quaternary ammonium compounds, and polyamine compounds to spent Bayer process liquor prior to or during the thermal treatment in a concentration of from 10 to 10,000 parts per million of the liquor.

6. The method of Claim 5 wherein the polyamine and polymeric quaternary ammonium compound is one polymer selected from the group consisting of polyacrylamide, the polymeric reaction products of: ethylenedichloride and ammonia including the associated methyl chloride and dimethyl sulfate quaternary amine salts; epichlorohydrin and dimethylamine including the associated methyl chloride or methyl sulfate quaternary amine salts; epichlorohydrin, dimethylamine and ethylenediamine including the associated methyl chloride or methyl sulfate quaternary amine salts; epichlorohydrin, dimethylamine and ammonia including the associated methyl chloride or methyl sulfate quaternary amine salts; epichlorohydrin, dimethylamine and hexamethylenediamine including the associated methyl chloride or methyl sulfate quaternary amine salts; triethanolamine condensate products including the associated methyl chloride or methyl sulfate quaternary amine salts; the acrylamide copolymer of one of the following monomers: Methacrylamidopropyltrimethylammonium chloride, Dimethylaminoethylmethacrylate methyl sulfate, Dimethylaminoethylmethacrylate methyl chloride, Dimethylaminoethylacrylate methyl chloride, and Dimethylaminoethylacrylate methyl sulfate.

7. The method of Claim 6 wherein the polymer is added at a concentration of from 100 to 5,000 parts per million.

8. The method of Claim 6 wherein the polymer is a polyacrylamide homopolymer or copolymer.

## Patentansprüche

1. Verfahren zur Behandlung von Bayer-Prozeß-Ablauge, die siliziumhaltige Komponenten enthält, wobei das Verfahren den Schritt des Zugebens von zumindest einer Polyamin- oder polymeren quaternären Ammoniumverbindung zur Ablauge in einer Konzentration von 10 bis 10.000 ppm in der Lauge umfaßt.

2. Verfahren nach Anspruch 1, worin das Polyamin und die polymere quaternäre Ammoniumverbindung ein Polymer ist, ausgewählt aus der Gruppe bestehend aus Polyacrylamid, den polymeren Reaktionsprodukten von: Ethylendichlorid und Ammoniak, einschließlich der entsprechenden quaternären Ammoniumsalze mit Methylchlorid und Dimethylsulfat; Epichlorhydrin und Dimethylamin, einschließlich der entsprechenden quaternären Ammoniumsalze mit Methylchlorid oder Methylsulfat; Epichlorhydrin, Dimethylamin und Ethylendiamin, einschließlich der entsprechenden quaternären Ammoniumsalze mit Methylchlorid oder Methylsulfat; Epichlorhydrin, Dimethylamin und Ammoniak, einschließlich der entsprechenden quaternären Ammoniumsalze mit Methylchlorid oder Methylsulfat; Epichlorhydrin, Dimethylamin und Hexamethylendiamin, einschließlich der entsprechenden quaternären Ammoniumsalze mit Methylchlorid oder Methylsulfat; Triethanolamin-Kondensationsprodukte, einschließlich der entsprechenden quaternären Ammoniumsalze mit Methylchlorid oder Methylsulfat; dem Acrylamid-Copolymer eines der folgenden Monomere: Methacrylamidopropyltrimethylammoniumchlorid, Dimethylaminoethylmethacrylat-methylsulfat, Dimethylaminoethylmethacrylat-methylchlorid, Dimethylaminoethylacrylat-methylchlorid und Dimethylaminoethylacrylat-methylsulfat.

3. Verfahren nach Anspruch 2, worin das zugegebene Polymer in der Ablauge 100 bis 5.000 ppm ausmacht.

4. Verfahren zur Herabsetzung der Bildung von unlöslichen, siliziumhaltigen Ablagerungen auf Geräten für den Bayer-Prozeß während einer thermischen Behandlung von Bayer-Prozeß-Ablauge, wobei das Verfahren den Schritt des Zugebens eines Diallyldimethylammoniumchlorid-Homopolymers oder -Copolymers zu Bayer-Prozeß-Ablauge in einer Konzentration von 10 bis 10.000 ppm in der Lauge vor oder während der thermischen Behandlung umfaßt.

5. Verfahren zur Herabsetzung der Bildung von unlöslichen, siliziumhaltigen Ablagerungen auf Geräten für den Bayer-Prozeß während einer thermischen Behandlung von Bayer-Prozeß-Ablauge, wobei das Verfahren den Schritt des Zugebens zumindest einer Verbindung, ausgewählt aus der Gruppe bestehend aus polymeren quaternären Ammoniumverbindungen und Polyaminverbindungen zu Bayer-Prozeß-Ablauge in einer Konzentration von 10 bis 10.000 ppm in der Lauge vor oder während der thermischen Behandlung umfaßt.

6. Verfahren nach Anspruch 5, worin die Polyamin- und die polymere quaternäre Ammoniumverbindung ein Polymer ist, ausgewählt aus der Gruppe bestehend aus Polyacrylamid, den polymeren Reaktionsprodukten von: Ethylendichlorid und Ammoniak, einschließlich der entsprechenden quaternären Ammoniumsalze mit Methylchlorid und Dimethylsulfat; Epichlorhydrin und Dimethylamin, einschließlich der entsprechenden quaternären Ammoniumsalze mit Methylchlorid oder Methylsulfat; Epichlorhydrin, Dimethylamin und Ethylendiamin, einschließlich der entsprechenden quaternären Ammoniumsalze mit Methylchlorid oder Methylsulfat; Epichlorhydrin, Dimethylamin und Ammoniak, einschließlich der entsprechenden quaternären Ammoniumsalze mit Methylchlorid oder Methylsulfat; Epichlorhydrin, Dimethylamin und Hexamethylendiamin, einschließlich der entsprechenden quaternären Ammoniumsalze mit Methylchlorid oder Methylsulfat; Triethanolamin-Kondensationsprodukte, einschließlich der entsprechenden quaternären Ammoniumsalze mit Methylchlorid oder Methylsulfat; dem Acrylamid-Copolymer eines der folgenden Monomere: Methacrylamidopropyltrimethylammoniumchlorid, Dimethylaminoethylmethacrylat-methylsulfat, Dimethylaminoethylmethacrylat-methylchlorid, Dimethylaminoethylacrylat-methylchlorid und Dimethylaminoethylacrylat-methylsulfat.

7. Verfahren nach Anspruch 6, worin das Polymer in einer Konzentration von 100 bis 5.000 ppm zugegeben wird.

8. Verfahren nach Anspruch 6, worin das Polymer ein Polyacrylamid-Homopolymer oder -Copolymer ist.

## Revendications

1. Méthode de traitement d'une liqueur du procédé Bayer usée contenant des composants silicieux, la méthode incluant l'étape d'ajout d'au moins une polyamine ou d'un composé d'ammonium quaternaire polymérique à la liqueur usée en une concentration de 100 à 1000 parties par million de la liqueur.

2. Méthode selon la revendication 1 dans laquelle la polyamine et le composé d'ammonium quaternaire polymérique est un polymère choisi dans le groupe consistant du polyacrylamide, des produits de réaction polymériques de : le dichlorure d'éthylène et l'ammoniac incluant les sels d'ammonium quaternaire diméthyl sulfate et chorure de méthyle associés ; l'épichlorohydrine et la diméthylamine incluant les sels amine quaternaire méthyl sulfate ou chlorure de méthyle associés ; l'épichlorohydrine, la diméthylamine et l'éthylènediamine incluant les sels amine quaternaire méthyl sulfate ou chlorure de méthyle associés ; l'épichlorhydrine, la diméthylamine et l'ammoniac incluant les sels amine quaternaire méthyl sulfate ou chlorure de méthyle associés ; l'épichlorohydrine, la diméthylamine et de l'hexaméthylènediamine incluant les sels d'amine quaternaire méthyl sulfate ou chlorure de méthyle associés ; les produits de condensation de la triéthanolamine incluant les sels amine quaternaire méthyl sulfate ou chlorure de méthyle associés ; le copolymère acrylamide d'un des monomères suivants : le chlorure de méthacrylamidopropyltriméthylammonium, le méthyl sulfate de diméthylaminoéthylméthacrylate, le méthyl chlorure de diméthylaminoéthylméthacrylate, le méthyl chlorure de diméthylaminoéthylacrylate, et le méthyl sulfate de diméthylaminoéthylacrylate.

3. Méthode selon la revendication 2 dans laquelle le polymère ajouté est de 10 à 5 000 parties par million dans la liqueur usée.

4. Méthode de réduction de la formation de dépôts silicieux insolubles sur un équipement de procédé Bayer pendant un traitement thermique d'une liqueur de procédé Bayer usée, la méthode comprenant l'étape d'ajout d'un homopolymère ou copolymère de chlorure de diallydiméthylammonium à la liqueur du procédé Bayer usée avant ou pendant le traitement thermique en une concentration de 10 à 10 000 parties par million de la liqueur.

5. Méthode de réduction de la formation de dépôts silicieux insolubles sur un équipement de procédé Bayer pendant un traitement thermique d'une liqueur usée du procédé Bayer, la méthode comprenant l'étape d'ajout d'au moins un composé choisi dans le groupe consistant des composés ammonium quaternaire polymériques, et des composés polyamine à une liqueur usée du procédé Bayer avant ou pendant le traitement thermique en une concentration de 10 à 10 000 parties par million de la liqueur.

6. Méthode selon la revendication 5 dans laquelle la polyamine et le composé ammonium quaternaire polymérique est un polymère choisi dans le groupe consistant du polyacrylamide, des produits de réaction polymérique de : le dichlorure d'éthylène et l'ammoniac incluant les sels amine quaternaire diméthyl sulfate et chlorure de méthyle associés ; l'épichlorohydrine et la diméthylamine incluant les sels amine quaternaire méthyl sulfate ou chlorure de méthyle associés ; l'épichlorohydrine, la diméthylamine et l'éthylènediamine incluant les sels d'amine quaternaire de méthyl sulfate ou de chlorure de méthyle associés ; l'épichlorohydrine, la diméthylamine et l'ammoniac incluant les sels amine quaternaire méthyl sulfate ou chlorure de méthyle associés ; l'épichlorohydrine, la diméthylamine et l'hexaméthylènediamine incluant les sels amine quaternaire méthyl sulfate ou chlorure de méthyle associés ; les produits de condensation de la triéthanolamine incluant les sels amine quaternaire méthyl sulfate ou chlorure de méthyle associés ; le copolymère acrylamide d'un des monomères suivants : le chlorure de méthacrylamidopropytriméthylammonium, le méthyl sulfate de diméthylaminométhylméthacrylate, le méthyl chlorure de diméthylaminoéthylméthacrylate, le méthyl chlorure de diméthylaminoéthylacrylate, et le méthyl sulfate de diméthylaminoéthylacrylate.

7. Méthode selon la revendication 6 dans laquelle le polymère est ajouté à une concentration de 100 à 5 000 parties par million.

8. Méthode selon la revendication 6 dans laquelle le polymère est un homopolymère ou copolymère de polyacrylamide.
